(19) Europäisches Patentamt European Patent Office Office européen des brevets

(11) **EP 3 919 990 A1**

(12) **EUROPEAN PATENT APPLICATION**

(43) Date of publication:
08.12.2021 Bulletin 2021/49

(51) Int Cl.:
**G05B 13/04** (2006.01)         **G05B 19/418** (2006.01)
**G05B 23/02** (2006.01)

(21) Application number: 20178448.5

(22) Date of filing: 05.06.2020

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft**
**80333 München (DE)**

(72) Inventors:
- **GURIJA, ShivaKumar**
  **508244 (Dist) Nalgonda, Telangana (IN)**
- **M. Sachin Sampras**
  **632009 Vellore, Tamil Nadu (IN)**
- **R. Nirmal Sabaree**
  **560100 Bangalore, Karnataka (IN)**
- **VINU, Ashwin**
  **686611 Kottayam, Kerala (IN)**

(74) Representative: **Isarpatent**
**Patent- und Rechtsanwälte Barth**
**Charles Hassa Peckmann & Partner mbB**
**Friedrichstrasse 31**
**80801 München (DE)**

(54) **METHOD AND SYSTEM FOR PREVENTING DAMAGE TO PHYSICAL COMPONENTS IN AN INDUSTRIAL ENVIRONMENT**

(57) The present invention relates a method and system for preventing damage to physical components (110, 606) in an industrial environment (100). The method comprises receiving current state information of one or more physical components (110, 606) in a technical installation (102, 600, 700) from one or more sensing units (112A-N, 608). Further, the method comprises generating a state analytics model of the one or more physical components (110, 606) based on the received current state information. Also, the method comprises determining rate of corrosion of the one or more physical components (110, 606) based on the generated state analytics model. Furthermore, the method comprises predicting subsequent condition of the one or more physical components (110, 606) for a defined time interval based on the determined rate of corrosion. Additionally, the method comprises controlling operation of the one or more physical components (110, 606) in the technical installation (102, 600, 700) based on the predicted subsequent condition.

FIG 5

EP 3 919 990 A1

**Description**

The present invention generally relates to the field of condition monitoring systems, and more particularly relates to a method and system for preventing damage to physical components in an industrial environment.

Damage of one or more physical components is a very common problem in most of the industries like oil and gas, food & beverage, petrochemical and the like. Typically, damage may be for example, a physical damage, or a chemical damage. Physical damages to the one or more physical components may be such as component part wear and tear, manufacturing defects, damaged ports and the like. The chemical damage may be such as corrosion. The one or more physical components may be pipelines, boilers, furnaces, heating units, material carriers, automation devices, electrical devices, and the like. Such damages of the one or more physical components cause unplanned downtime. This is more prevalent in case of industrial plants that employ use of physical components such as pipelines for transport of materials. The corrosive nature of the materials flowing through the pipelines can accelerate rate at which a pipeline's lifetime diminishes. The rate of corrosion may not be fixed for each pipeline, as it may vary due to several environmental factors. However, the usage of corroded pipelines in critical industries like Oil & Gas, petrochemical industries may lead to adverse effects causing severe damage to people, property and environment. The corrosion may occur due to the pipeline age, materials transported over the pipelines, environmental factors like humidity, pressure and temperature and geographical conditions. This has led to development of a lot of solutions that aim at determining the right time at which these pipes can be decommissioned and replaced with new ones.

Conventionally, in cases of damages to the one or more physical components, such as pipelines, the plants had to be completely shut down for maintenance. Later, the entire piping installation had to be disassembled, after which several nondestructive tests were to be carried out. Later, the piping installation had to be reassembled again if the results of the tests were positive. This process had lot of impact on productivity and involved high environmental risk.

Another problem is that the engineers responsible for commissioning of the plant had to determine a threshold regarding duration for which a pipeline can last in the given industrial environment. However, such value determined by the engineers may not always be a fixed value. Based on various parameters such as the temperature within and outside the pipeline, the pressure as well as the nature of the material flowing through the pipeline, the rates at which the pipeline corrodes may vary significantly in nature and need not necessarily conform to the rate that was determined by the engineers. This may lead to the pipeline either prematurely corroding or even overshooting the threshold prescribed by the engineers. In the former scenario, the pipeline had to be decommissioned much before the date of expiry and hence would require all operations to be stalled till the pipeline is replaced. This is a classic example of an unplanned downtime which can lead to a substantial loss in terms of productivity and overall throughput from the plant. As for the latter scenario, the pipeline would have been decommissioned much before it reached full maturity, which is undesirable from a business standpoint.

Therefore, there is always a constant need for preventing damages to the one or more physical components, which increases operational efficiency and helps in early prediction of such damages to the one or more physical components, scalable and dynamic and is suitable to different types of physical component.

Therefore, it is an object of the present invention to provide a method and system for preventing damage to physical components in an industrial environment.

The object of the present invention is achieved by a method for preventing damage to physical components in an industrial environment. The method comprises receiving current state information of one or more physical components in a technical installation from one or more sensing units. The current state information comprises one or more parameter values associated with the one or more physical components and a current state of the one or more physical components. The current state comprises normal, abnormal, require maintenance, faulty and the like. The one or more parameter values comprises corrosion pit depth, flow rate of material in the pipeline, type of material flowing in the pipeline, environmental pressure, environmental humidity, environmental temperature. The one or more sensing units may be sensors, for example, temperature sensors, humidity sensors, corrosion pit depth sensors and the like. The one or more physical component may be any kind of metallic component. For example, the one or more physical component may be a pipeline. In an alternate embodiment, the one or more physical component may be a heater, furnace, component with metallic surface, component with metallic coating and the like. The technical installation may be an industrial plant. The communication network may be a wireless connection (i.e., internet) or a wired connection (LAN, WLAN, industrial ethernet or the like). In an embodiment, the communication network may be a short-range communication (for example, Bluetooth, Wi-Fi, RFID, NFC or any other) and/or a long range communication network (for example, internet, ethernet cable, Industrial Ethernet, or the like).

Further, the method comprises generating a state analytics model of the one or more physical components based on the received current state information of the one or more physical components using one or more analytics rules. The one or more state analytics model of the one or more physical components comprises a view of processed one or more parameter values, one or more states, other one or more physical components correlated to the one or more physical components (110), and time stamp information. The one or more analytics rules comprises reinforcement learning, and direct future prediction based rules.

Further, the method comprises determining rate of corrosion of the one or more physical components based on the generated state analytics model. The rate of corrosion is - speed at which the physical component degrades in a given environment or "Corrosion Threshold Factor Uct-factor. The method further comprises predicting subsequent condition of the one or more physical components for a defined time interval based on the determined rate of corrosion. The predicted subsequent condition comprises subsequent state of the one or more physical components (110), time period associated with the state, and parameter values affected due to the subsequent state. The subsequent state of the one or more physical component may be for example, normal, low risk, medium risk, or critical state. The parameter values affected due to the subsequent state may be for example, temperature, corrosion pit depth, humidity and the like.

Further, the method comprises controlling operation of the one or more physical components in the technical installation based on the predicted subsequent condition of the one or more physical components.

Further, the method comprises validating the predicted subsequent state and subsequent one or more parameter values associated with the one or more physical components based on a predefined rule. The predefined rules comprise any standard validation rules known in the art. In an exemplary embodiment, the rules comprise:

a. Rule 1 : Normal : Information indicating that the parameters are in correct limits and Corrosion Threshold Factor UCT" is within the normal range, such as below 30. This means there is no corrosion.
b. Rule 2 : Minor : This rule indicates about the usability of pipeline as how long the physical component 110 can be used considering the current parameter values and UCT is calculated . This rule is executed when UCT range is 30-60.
c. Rule 3: Major : this rule indicates about the usability of physical component 110 and time period by when the user needs to take an action to control the situation considering the current parameter values and UCT is calculated. This rule is executed when the UCT range is 60 -80.
d. Rule 4 : Critical : this rule indicates the urgent requirement to schedule the maintenance for the physical component 110 and also time range when the computing system 114 controls the usage of pipeline to avoid unplanned downtime. Considering the current parameter values, the UCT is calculated. This rule is executed when the UCT is greater than 80. This rule helps the user to be aware of the downtime and take appropriate action within defined time period. If the user doesn't take required action within the defined time period, the algorithm monitors the system to take the action on the system to avoid any unforeseen damages. Here there is no complete corrosion has occurred so that required action can be taken.

In a preferred embodiment, in generating the state analytics model of the physical component based on the received current state information of the one or more physical components using one or more analytics rules, the method comprises determining correlation between the one or more parameter values associated with the one or more physical components. The method further comprises determining previous states of the one or more physical components using pre-stored state table associated with the one or more physical components. The prestored state table comprises history of states of physical components correspondingly mapped to a root cause of the states. Further, the method comprises computing a state feature vector for the current state of the one or more physical components based on the determined correlation and the determined previous states of the one or more physical components. The state feature vector indicates condition of the one or more physical components. The condition of the one or more physical components may be healthy/normal, corrosion initiation, corrosion onset, corrosion propagation, critical (pipeline is 80 % corroded but still usable, time to take required actions to prevent unforeseen downtimes). Further, the method comprises generating the state analytics model of the one or more physical components based on the computed state feature vector.

In another preferred embodiment, in determining rate of corrosion of the one or more physical components based on the generated state analytics model, the method comprises identifying a set of parameter values relevant to corrosion condition of the one or more physical components by analyzing the state analytics model. Further, the method comprises comparing the identified set of parameter values with a corresponding pre-stored set of parameter values relevant to the corrosion condition of the one or more physical components. Also, the method comprises identifying a deviation in the identified set of parameter values relevant to the corrosion condition based on the comparison. Also, the method comprises determining rate of corrosion of the one or more physical components based on the identified deviation in the identified set of parameter values relevant to the corrosion condition.

In yet another embodiment, in predicting subsequent condition of the one or more physical components for a defined time interval based on the determined rate of corrosion, the method comprises processing the determined rate of corrosion using one of machine learning model. The one of machine learning model, may be for example, a reinforcement learning model. In an embodiment, the one of machine learning model may be any machine learning method. The machine learning model is an artificial intelligence based mathematical model representing the feature vectors of the states of the physical components. Further, the method comprises generating one or more updated parameter values of the one or more physical components for the defined time interval based on the processed rate of corrosion. Also, the method comprises computing an updated state feature vector for the subsequent state of the one or more physical components based on the generated one or more updated parameter values. The updated state feature vector indicates subsequent condition of the one or more physical components. The method comprises determining an updated rate of corrosion of the one or more physical components based on the updated state feature vector. Further, the method comprises determining a difference between the rate of corrosion and updated rate of corrosion of the one or more physical components. Further, the method comprises predicting subsequent condition of the one or more physical components (110) for a defined time interval based on the determined difference.

In still another embodiment, in controlling the operation of the one or more physical components in the technical installation based on the predicted subsequent condition of the one or more physical components, the method comprises identifying type of the subsequent condition of the one or more physical components. The type of the subsequent condition may be healthy/normal, corrosion initiation, corrosion onset, corrosion propagation, critical (pipeline is 80 % corroded but still usable, time to take required actions to prevent unforeseen downtimes). The method comprises classifying the predicted subsequent condition of the one or more physical components into one or more pre-stored types of conditions based on the identified type of the subsequent condition. Further, the method comprises determining one or more control action corresponding to the classified predicted subsequent condition based on the pre-stored state table associated with the one or more physical components. In an embodiment, the one or more control action may be closing valve, updating parameter values of the one or more physical components, opening valves, redirecting the route of the flow of material to different physical component, signaling through connected alarm systems/hooters and the like. Further, the method comprises deploying the determined one or more control action onto the respective physical component thereby controlling operation of the one or more physical components in the technical installation.

In still another preferred embodiment, in controlling the operation of the one or more physical components in the technical installation based on the predicted subsequent condition of the one or more physical components, the method comprises generating notification messages indicating the predicted subsequent condition of the one or more physical components. In an embodiment, the notification message may be an alert text, or an alarm generated. Further, the method comprises broadcasting the notification messages to one or more user devices via a network.

The object of the present invention is also be achieved by a computing system for preventing damage of a physical component in an industrial environment. The computing system may comprise one or more processors and a memory coupled to the one or more processors. The memory comprises a damage prevention module stored in the form of machine-readable instructions and executable by the one or more processors.

The damage prevention module is configured for performing the method described above.

The object of the invention can also be achieved by a technical installation. The technical installation comprises one or more physical components and one or more sensing units coupled to the one or more physical components. The one or more sensing units are configured for capturing real-time data associated with the one or more physical components. In an embodiment, the real-time data may be the state information, operational parameter values, and the like. The technical installation further comprises a computing system comprising a damage prevention module communicatively coupled to the one or more sensing units. The damage prevention module is configured for performing a method as descried above. Further, the technical installation also comprises an agent communicatively coupled to the computing system.

The object of the invention can also be achieved by an industrial environment comprising one or more user devices and one or more technical installation. The one or more technical installation comprises a computing system. Further, the industrial environment comprises a cloud computing system communicatively coupled to the one or more technical installation and the one or more user devices via a network.

The object of the invention can also be achieved by a computer-program product, having machine-readable instructions stored therein, that when executed by a processor, causes the processor to perform method steps as described above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:

FIG 1     is a schematic representation of an industrial environment capable of preventing damage to physical components, according to an embodiment of the present invention;

FIG 2     is a block diagram of a computing system such as those shown in FIG 1, depicting various components to implement embodiments of the present invention;

FIG 3     is a block diagram of a damage prevention module, such as those shown in FIG 1 and 2, capable of preventing damage to physical components, according to the embodiment of the present invention;

FIG 4          is a block diagram of an analytics model generation unit such as those shown in FIG. 3, according to an embodiment of the present invention;

FIG 5          is a process flowchart illustrating an exemplary method of preventing damage to physical components, according to the embodiment of the present invention;

FIG 6A-C     is a schematic representation of a technical installation capable of preventing damage to physical components, according to another embodiment of the present invention;

FIG 7          is a schematic representation of a technical installation, such as those shown in FIG 1, capable of preventing damage to physical components, according to an embodiment of the present invention;

FIG 8          is a graphical representation of an analytics model on a user interface of a user device, according to an embodiment of the present invention; and

FIG 9A-D     is a snapshot of an edge application capable of preventing damage to physical components, according to an embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

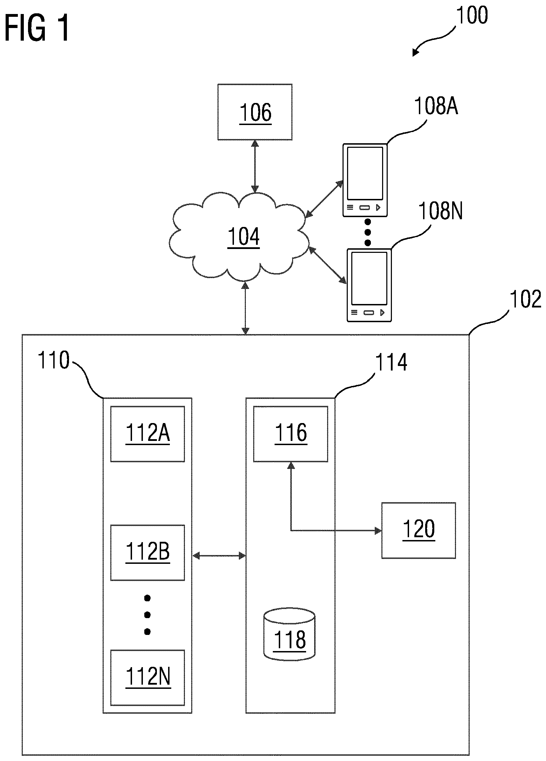

FIG 1 is a schematic representation of an industrial environment 100 capable of preventing damage to physical components 110, according to an embodiment of the present invention. Particularly, FIG 1 depicts a cloud computing system 106 which is capable of delivering cloud applications for managing a technical installation 102. The technical installation 102 comprises one or more physical components 110, a computing system 114 and an agent 120.

The one or more physical components 110 may include pipelines, heating units, furnaces, or any metallic devices. The one or more physical components 110 may be internet of things (IoT) enabled. In an exemplary embodiment, the one or more physical components 110 comprises one or more sensing units 112A-N. The one or more sensing unit 112A-N may be sensors embedded at multiple positions on the physical component 110. The one or more sensing unit 112A-N is configured for capturing real-time data associated with the one or more physical component 110. The real time data comprises temperature values, pressure values, liquid levels, weather condition values, and any other data measured by one or more sensing units 112A-N placed in the vicinity of the physical component 110 or embedded to the one or more physical components 110. Specifically, the one or more sensing unit 112A-N senses the real-time data of the physical component 110 and transmits the sensed real-time data of the physical component 110 to the computing system 114. In an alternate embodiment, the sensed real-time data is also transmitted to the cloud computing system 106 via the network 104. As used herein the communication network 104, refers to, for example, any wired or wireless network such as the internet, an intranet, that implements Bluetooth® of Bluetooth Sig, Inc., a network that implements Wi-Fi® of Wi-Fi Alliance Corporation, an ultra-wideband communication network (UWB), a wireless universal serial bus (USB) communication network, a communication network that implements ZigBee® of ZigBee Alliance Corporation, a general packet radio service (GPRS) network, a mobile telecommunication network such as a global system for mobile (GSM) communications network, a code division multiple access (CDMA) network, a third generation (3G) mobile communication network, a fourth generation (4G) mobile communication network, a long-term evolution (LTE) mobile communication network, a public telephone network, etc., a local area network, a wide area network, an internet connection network, an infrared communication network, etc., or a network formed from any combination of these networks.

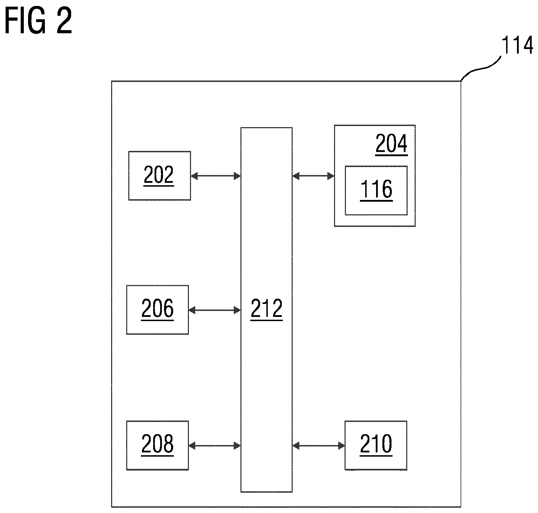

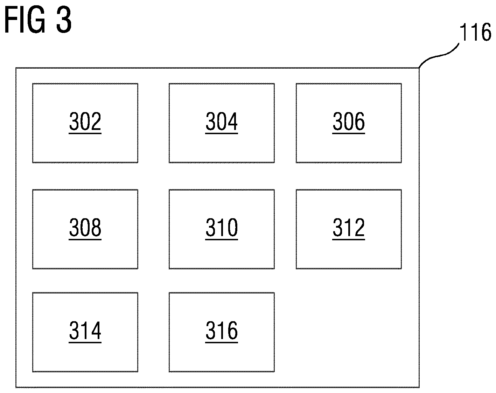

The computing system 114 comprises a damage prevention module 116 and a storage 118. The computing system 114 also comprise a processor, a memory, a storage unit, input output unit and a display unit. A detailed view of various components of the computing system 114 is shown in FIG 2. The computing system 114 may be a standalone system or a system on a cloud. In a preferred embodiment, the computing system 114 is an edge system capable of preventing damages to the one or more physical components 110. For example, the computing system 114v may be, but not limited to an IPC 227E edge device. The damage prevention module 116 is stored in the form of machine-readable instructions and executable by the computing system 114. The detailed components of the damage prevention module 116 has been explained in FIG. 3.

In an embodiment, the computing system 114 comprises one or more edge applications capable of preventing damage to the one or more physical components 110. The edge applications are web-based applications which is containerized and deployed in this edge device, i.e., the computing system 114. The edge applications may use docker or containerization technology to perform method steps in order to prevent damages to the one or more physical components 110. Advantageously, the edge applications help to detect corrosion even before it occurs, determine how long further the pipeline can be used before maintenance and based on the learned data the edge application should be able to take necessary corrective measures to avoid usage of corrupt pipelines. The data is trained using the Reinforcement learning method.

The storage 118 is configured to store the input physical component data associated with the one or more physical component 110 in the technical installation 102 in a specific format. In an embodiment, the storage 118 may comprise a relational database (RDBMS), file system and not only SQL (NoSQL) database. The storage 118 are encrypted to secure all data stored. Further, the storage 118 is configured to store the analytics models, parameter values, rare of corrosion, operating states of the one or more physical component 110, operating condition, state feature vectors and the like. In an embodiment, the storage 118 stores all the data of the physical component 110 during an intermittent network connectivity. This data is then made available to the user devices 108A-N or the physical component 110 once the network 104 connectivity is active.

The agent 120 is communicatively coupled to the computing system 114 and one or more physical components 110. The agent 120 is configured for communicating control actions corresponding to the predicted subsequent conditions of the one or more physical components 110. In an embodiment, the agent 120 may be a gateway, a programmable logic controller, a cloud connector, an input output module and the like. In another embodiment, the agent 120 may be another edge computing device or an IOT enabled device.

The cloud computing system 106 is connected to the technical installation 102 via a network 104 (e.g., Internet). Although, FIG 1 illustrates the cloud computing system 106 connected to one technical installation 102, one skilled in the art can envision that the cloud computing system 106 can be connected to several technical installations located at different locations via the network 104.

Further, the cloud computing system 106 is also connected to user device(s) 108A-N via the network 104. The user devices 108A-N can access the computing system 114 for preventing damage to the one or more physical components 110. The user devices 108A-N can be a laptop computer, desktop computer, tablet computer, smartphone and the like. The user devices 108A-N can access cloud applications and edge applications (such as providing performance visualization of the one or more physical component 110) via a web browser or an edge network.

In order to access the cloud applications or the edge applications, one or more artifacts are required to be deployed on a cloud platform or an edge platform, which are then accessed by personnel and computing system 114 in the technical installation 102 to avail the cloud applications. Therefore, the cloud computing system 106 is provided which is capable of preventing damage to the one or more physical components 110. Exemplary artifacts may include applications (application for monitoring health, state and behavior of the one or more physical components 110), anomalies, simulation models, engineering configuration, digital twin models, code snippets, APIs, security applications, firmware and so on. The user device 108A-N may access the artifacts to avail cloud applications.

The cloud computing system 106 may comprise a cloud interface, cloud hardware and OS, cloud platform. The cloud interface enables communication between the cloud platform and the technical installation 102. Also, the cloud interface enables communication between the cloud platform and the user devices 108A-N.

The cloud hardware and OS may include one or more servers on which an operating system (OS) is installed. The one or more servers comprises one or more processing units, one or more storage devices for storing data, and other peripherals required for providing cloud functionality. The cloud platform and the edge platform is a platform which implements functionalities such as data storage, data analysis, data processing, data management, data validation, data visualization, data communication on the cloud or edge hardware and OS via APIs and algorithms and delivers the aforementioned cloud/edge services using artifacts. The cloud platform and the edge platform may comprise a combination of dedicated hardware and software built on top of the cloud/edge hardware and OS.

The cloud computing system 106 may comprise a plurality of servers or processors (also known as 'cloud infrastructure'), which are geographical distributed, connected with each other via the network 104. A dedicated platform (hereinafter referred to as 'cloud platform' and/or the 'edge platform') is installed on the servers/processors for providing above functionality as an application (hereinafter referred to as ' software application'). The cloud platform and the edge platform may comprise a plurality of software programs executed on one or more servers or processors of the cloud computing system 106 to enable delivery of the requested applications to the devices and its users.

One or more artifacts are deployed in the computing system 114 and the cloud computing system 106 to provide different applications to the user devices 108A-N. For example, an application for preventing damage to the one or more physical components 110, for example, a pipeline in an industrial facility may be deployed as an artifact. The application may be capable of analyzing the data collected from the pipelines over a period. The user device 108A-N may subscribe to cloud applications which analyzes data associated with pipelines using the application, and displays the outcome of analysis (e.g., outliers) to the user devices 108A-N via a web application on the user device 108A-N.

The cloud platform may enable a plurality of developers to develop the one or more artifacts. Also, the cloud platform may facilitate providers to deploy one or more artifacts developed by the developers in the cloud computing system 106 to deliver cloud applications to one or more user devices 108A-N. In an embodiment, the cloud platform handles the online learnings of the technical installation 102 is a decentralized manner, thus reducing the need for high network bandwidth. This would be advantageous in case if the network connectivity is limited at the technical installation 102.

FIG 2 is a block diagram of a computing system 114 such as those shown in FIG 1, depicting various components to implement embodiments of the present invention. In FIG 2, the computing system 114 includes a processor(s) 202, an accessible memory 204, a communication interface 206, a network interface 208, an input/output unit 210, and a bus 212.

The processor(s) 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The processor(s) 202 may also include embedded controllers, such as generic or programmable logic devices or arrays, application specific integrated circuits, single-chip computers, and the like.

The memory 204 may be non-transitory volatile memory and nonvolatile memory. The memory 204 may be coupled for communication with the processor(s) 202, such as being a computer-readable storage medium. The processor(s) 202 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 includes a damage prevention module 116 stored in the form of machine-readable instructions on any of the above-mentioned storage media and may be in communication with and executed by the processor(s) 202. When executed by the processor(s) 202, the damage prevention module 116 causes the processor(s) 202 to receive current state information of one or more physical components 110 in a technical installation 102 from one or more sensing units 112AN. The current state information comprises one or more parameter values associated with the one or more physical components 110 and a current state of the one or more physical components 110). The current state comprises normal, abnormal, require maintenance, faulty and the like. The one or more parameter values comprises corrosion pit depth, flow rate of material in the pipeline, type of material flowing in the pipeline, environmental pressure, environmental humidity, environmental temperature. The parameter values are read using containerized IOWA-RT service and converted into RDF format.

Further, the damage prevention module 116 causes the processor(s) 202 to generate a state analytics model of the one or more physical components 110 based on the received current state information of the one or more physical components 110 using one or more analytics rules. The state analytics model of the one or more physical components 110 comprises a view of processed one or more parameter values, one or more states, other one or more physical components 110 correlated to the one or more physical components 110, and time stamp information. The one or more analytics rules comprises reinforcement learning, and direct future prediction based rules.

Furthermore, the damage prevention module 116 causes the processor(s) 202 to determine rate of corrosion of the one or more physical components 110 based on the generated state analytics model. The rate of corrosion, also referred as 'Corrosion threshold factor UCT' is a factor which defines threshold range for rate of corrosion which takes place in the physical component (such as pipelines) and concludes the duration within which any maintenance activity is to be planned for the pipelines as well as the estimated time left before the pipeline must be decommissioned at the current state. Also, the damage prevention module 116 causes the processor(s) 202 to predict subsequent condition of the one or more physical components 110 for a defined time interval based on the determined rate of corrosion. The predicted subsequent condition comprises subsequent state of the one or more physical components 110, time period associated with the state, and parameter values affected due to the subsequent state. The subsequent state of the one or more physical component may be for example, normal, low risk, medium risk, or critical state. The parameter values affected due to the subsequent state may be for example, temperature, corrosion pit depth, humidity and the like.

Additionally, the damage prevention module 116 causes the processor(s) 202 to control operation of the one or more physical components 110 in the technical installation 102 based on the predicted subsequent condition of the one or more physical components 110. Advantageously, this helps to predict how long a physical component, for example, a pipeline is usable and alerts the user at specific checkpoints with recommended action to be taken, thereby effectively controlling the operation of the physical component.

Further, the damage prevention module 116 causes the processor(s) 202 to validate the predicted subsequent state and subsequent one or more parameter values associated with the one or more physical components 110 based on a predefined rules. The predefined rules comprise any standard validation rules known in the art.

Further, in generating the state analytics model of the physical component based on the received current state information of the one or more physical components 110 using one or more analytics rules, the damage prevention module 116 causes the processor(s) 202 to determine correlation between the one or more parameter values associated with the one or more physical components 110. Further, the damage prevention module 116 causes the processor(s) 202 to determine previous states of the one or more physical components 110 using pre-stored state table associated with the one or more physical components 110. The prestored state table comprises history of states of physical components correspondingly mapped to a root cause of the states. Also, the damage prevention module 116 causes the processor(s) 202 to compute a state feature vector for the current state of the one or more physical components 110 based on the determined correlation and the determined previous states of the one or more physical components 110. The state feature vector indicates condition of the one or more physical components 110. The condition of the one or more physical components 110 may be healthy/normal, corrosion initiation, corrosion onset, corrosion propagation, critical (pipeline is 80 % corroded but still usable, time to take required actions to prevent unforeseen downtimes). Further, the damage prevention module 116 causes the processor(s) 202 to generate the state analytics model of the one or more physical components 110 based on the computed state feature vector.

In an embodiment, in determining rate of corrosion of the one or more physical components 110 based on the generated state analytics model, the damage prevention module 116 causes the processor(s) 202 to identify a set of parameter values relevant to corrosion condition of the one or more physical components 110 by analyzing the state analytics model. Further, the damage prevention module 116 causes the processor(s) 202 to compare the identified set of parameter values with a corresponding pre-stored set of parameter values relevant to the corrosion condition of the one or more physical components 110. Also, the damage prevention module 116 causes the processor(s) 202 to identify a deviation in the identified set of parameter values relevant to the corrosion condition based on the comparison. Furthermore, the damage prevention module 116 causes the processor(s) 202 to determine rate of corrosion of the one or more physical components 110 based on the identified deviation in the identified set of parameter values relevant to the corrosion condition

In an embodiment, in predicting subsequent condition of the one or more physical components 110 for a defined time interval based on the determined rate of corrosion, the damage prevention module 116 causes the processor(s) 202 to process the determined rate of corrosion using one of machine learning model. The machine learning model is an artificial intelligence based mathematical model representing the feature vectors of the states of the physical components 110. Further, the damage prevention module 116 causes the processor(s) 202 to generate one or more updated parameter values of the one or more physical components 110 for the defined time interval based on the processed rate of corrosion. Furthermore, the damage prevention module 116 causes the processor(s) 202 to compute an updated state feature vector for the subsequent state of the one or more physical components 110 based on the generated one or more updated parameter values. The updated state feature vector indicates subsequent condition of the one or more physical components 110. Also, the damage prevention module 116 causes the processor(s) 202 to determine an updated rate of corrosion of the one or more physical components 110 based on the updated state feature vector. Further, the damage prevention module 116 causes the processor(s) 202 to determine a difference between the rate of corrosion and updated rate of corrosion of the one or more physical components 110. Further, the damage prevention module 116 causes the processor(s) 202 to predict subsequent condition of the one or more physical components 110 for a defined time interval based on the determined difference.

In an embodiment, in controlling the operation of the one or more physical components 110 in the technical installation 102 based on the predicted subsequent condition of the one or more physical components 110, the damage prevention module 116 causes the processor(s) 202 to identify type of the subsequent condition of the one or more physical components 110. Also, the damage prevention module 116 causes the processor(s) 202 to classify the predicted subsequent condition of the one or more physical components 110 into one or more pre-stored types of conditions based on the identified type of the subsequent condition. Further, the damage prevention module 116 causes the processor(s) 202 to determine one or more control action corresponding to the classified predicted subsequent condition based on the pre-stored state table associated with the one or more physical components 110. Advantageously, the control action may be such as for example, closing of the valve of the pipeline when the corrosion level of the pipeline exceeds the permissible threshold limits. Further, the one or more control action may be closing valve, updating parameter values of the one or more physical components 110, opening valves, redirecting the route of the flow of material to different physical component, signaling through connected alarm systems/hooters and the like. Furthermore, the damage prevention module 116 causes the processor(s) 202 to deploy the determined one or more control action onto the respective physical component thereby controlling operation of the one or more physical components 110 in the technical installation 102.

Further, in controlling the operation of the one or more physical components 110 in the technical installation 102 based on the predicted subsequent condition of the one or more physical components 110, the damage prevention module 116 causes the processor(s) 202 to generate notification messages indicating the predicted subsequent condition of the one or more physical components 110. In an embodiment, the notification message may be an alert text, or an alarm generated. Also, the damage prevention module 116 causes the processor(s) 202 to broadcast the notification messages to one or more user devices 108A-N via a network 104.

The communication interface 206 is configured for establishing communication sessions between the one or more user device 108AN, the one or more physical components 110, the agent 120 and the cloud computing system 106. In an embodiment, the communication interface 206 interacts with the interface at the user devices 108A-N for allowing the engineers to access the edge applications of the physical component 110 and perform one or more actions on the predicted conditions stored in the storage 118. The network interface 208 helps in managing network communications between the one or more physical components 110, the agent 120 and the user devices 108A-N.

The input-output unit 210 may include input devices a keypad, touch-sensitive display, camera (such as a camera receiving gesture-based inputs), etc. capable of receiving one or more input signals, such as user commands to process data. Also, the input-output unit 210 may be a display unit for displaying a graphical user interface which visualizes the physical components data and also displays the status information associated with each set of actions performed on the physical component data. The set of actions may include data entry, data modification or data display. The bus 212 acts as interconnect between the processor 202, the memory 204, and the input-output unit 210. Those of ordinary skilled in the art will appreciate that the hardware depicted in FIG 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure. Those skilled in the art will recognize that, for simplicity and clarity, the full structure and operation of all data processing systems suitable for use with the present disclosure is not being depicted or described herein. Instead, only so much of a computing system 114 as is unique to the present disclosure or necessary for an understanding of the present disclosure is depicted and described. The remainder of the construction and operation of the computing system 114 may conform to any of the various current implementation and practices known in the art. FIG 3 is a block diagram of a damage prevention module 116, such as those shown in FIG 1 and 2, capable of preventing damage to physical components 110, according to the embodiment of the present invention. In FIG. 3, the damage prevention module 116 comprises a request handler 302, an analytics model generation unit 304, a processing module 306, a prediction module 308, controlling module 310, database 312, alert/notification module 314 and a visualization module 316.

The request handler 302 is configured to receive current state information of one or more physical components 110 in a technical installation 102 from one or more sensing units 112AN. The current state information comprises one or more parameter values associated with the one or more physical components 110 and a current state of the one or more physical components 110. The current state comprises normal, abnormal, require maintenance, faulty and the like. The one or more parameter values comprises corrosion pit depth, flow rate of material in the pipeline, type of material flowing in the pipeline, environmental pressure, environmental humidity, environmental temperature. The parameter values are read using containerized IOWA-RT service and converted into RDF format. The one or more sensing units 112A-N may be sensors, for example, temperature sensors, humidity sensors, corrosion pit depth sensors and the like. The one or more physical component may be any kind of metallic component. For example, the one or more physical component may be a pipeline. In an alternate embodiment, the one or more physical component may be a heater, furnace, component with metallic surface, component with metallic coating and the like. The technical installation 102 may be an industrial plant. In an embodiment, the request handler 302 ensures that the received current state information is normalized and in format suitable for further processing by the analytics model generation unit 304.

The analytics model generation unit 304 is configured to generate a state analytics model of the one or more physical components 110 based on the received current state information of the one or more physical components 110 using one or more analytics rules. The one or more state analytics model of the one or more physical components (110) comprises a view of processed one or more parameter values, one or more states, other one or more physical components 110 correlated to the one or more physical components (110), and time stamp information. The one or more analytics rules comprises reinforcement learning, and direct future prediction based rules.

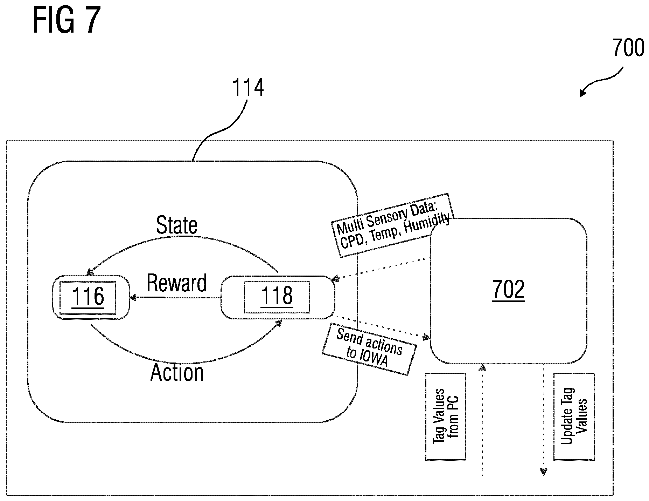

Specifically, when the current state information of the one or more physical components 110 is received, the analytics model generation unit 304 is configured to determine correlation between the one or more parameter values associated with the one or more physical components (110). In an exemplary embodiment, the parameter values are fed to a reinforcement learning agent. In this multivariate approach, parameters such as corrosion pit depth and other parameters like pressure, humidity and temperature are correlated using a Direct Future Prediction Algorithm (DFP), which is a reinforcement learning algorithm. Advantageously, in an exemplary embodiment, with the help of reinforcement learning algorithm(DFP), the values of the other sensors are predicted based on values of a sensor installed in pipeline which is used to get the corrosion related parameters. This helps to reduce the cost of installation of large number of sensors along the pipeline. Furthermore, the direct future prediction method along with reinforcement learning also introduces properties of supervised learning. This is because the introduction of DFP algorithm brings in state measurements along with rewards for each action. Hence, the learning time for this machine learning algorithm is reduced as it need not require labelled data. This is explained in detail in FIG 7.

Further, the analytics model generation unit 304 is configured to determine previous states of the one or more physical components 110 using pre-stored state table associated with the one or more physical components 110. The pre-sored state table comprises one or more current and previous states of the one or more physical components 110 with respect to time intervals. The prestored state table comprises history of states of physical components 110 correspondingly mapped to a root cause of the states. The analytics model generation unit 304 is configured to compute a state feature vector for the current state of the one or more physical components 110 based on the determined correlation and the determined previous states of the one or more physical components 110. The state feature vector indicates condition of the one or more physical components 110. In an embodiment, this state feature vector is the initial state feature vector. The condition of the one or more physical components 110 may be healthy/normal, corrosion initiation, corrosion onset, corrosion propagation, critical (pipeline is 80 % corroded but still usable, time to take required actions to prevent unforeseen downtimes). The state feature vector is a goal vector which corelates the state variables such as temperature, pressure, humidity and corrosion pit depth. The goal vector values vary based on the current state. For example, if the current state of the pipeline is abnormal due to corrosion, then the values of the one or more parameters deviate from those parameter values when the pipeline is under normal state, thereby deviating the value of the goal vector. In other words, the value of goal vector differs for a pipeline before corrosion from that of a value of the goal vector when a pipeline is corroded. This change in goal vector value helps in generating the state analytics model indicating this change in goal vector. The analytics model generation unit 304 is configured to generate the state analytics model of the one or more physical components 110 based on the computed state feature vector. The generated state analytics model comprises relationships between the different parameter values, a goal vector assigned to each of the correlated parameter value, a time frame, a state information and the like. The generated state analytics model is then fed to the processing module 306.

The processing module 306 is configured to determine rate of corrosion of the one or more physical components 110 based on the generated state analytics model. The rate of corrosion, also referred as 'Corrosion threshold factor UCT' is a factor which defines threshold range for rate of corrosion which takes place in the physical component (such as pipelines) and concludes the duration within which any maintenance activity is to be planned for the pipelines as well as the estimated time left before the pipeline must be decommissioned at the current state. In an embodiment, this rate of corrosion is the initial rate of corrosion. Specifically, the processing module 306 is configured to identify a set of parameter values relevant to corrosion condition of the one or more physical components 110 by analyzing the state analytics model. For example, the set of parameter values relevant to corrosion condition out of plurality of parameter values, may be corrosion pit depth, temperature, humidity and the like. These are the parameters influencing the corrosion condition of the pipeline. Further, the processing module 306 is configured to compare the identified set of parameter values with a corresponding pre-stored set of parameter values relevant to the corrosion condition of the one or more physical components 110. Also, the processing module 306 is configured to identify a deviation in the identified set of parameter values relevant to the corrosion condition based on the comparison. The deviation indicates whether the fidelity with which the model predicts the future values. The closer the model gets to predict the values correctly, the lesser is the deviation and hence lesser the scope for error. Further, the processing module 306 is configured to determine rate of corrosion of the one or more physical components 110 based on the identified deviation in the identified set of parameter values relevant to the corrosion condition. The rate of corrosion is then fed to the prediction module 308.

In an embodiment, the rate of corrosion, UcT is determined as below:

a. Before corrosion is encountered:

$$UcT=f(mt)=0.9*Temp \quad + \quad 1*Humidity \quad +0.95*Pressure \\ +0*CPD…equation\ 1$$

Where UcT= corrosion threshold factor; and
g= [0.9, 1, 0.95, 0] is the goal vector

b. After corrosion is encountered:

$$UcT=f(mt)= \quad 0.9*Temp \quad +1*Humidity \quad + \quad 0.95*Pressure \quad +1*CPD…where \\ equation\ 2$$

Where g= [0.9, 1, 0.95, 1] is the goal vector

The prediction module 308 is configured to predict subsequent condition of the one or more physical components (110) for a defined time interval based on the determined rate of corrosion. The predicted subsequent condition comprises subsequent state of the one or more physical components 110, time period associated with the state, and parameter values affected due to the subsequent state. The subsequent state refers to next possible state of the physical components 110. The subsequent state of the one or more physical component may be for example, normal, low risk, medium risk, or critical state. The parameter values affected due to the subsequent state may be for example, temperature, corrosion pit depth, humidity and the like. Specifically, the prediction module 308 is configured to process the determined rate of corrosion using one of machine learning model. In an exemplary embodiment, the machine learning model may be, but not limited to, a reinforcement learning model. The machine learning model is an artificial intelligence based mathematical model representing the feature vectors of the states of the physical components 110. The prediction module 308 is further configured to generate one or more updated parameter values of the one or more physical components 110 for the defined time interval based on the processed rate of corrosion. The prediction module 308 is configured to compute an updated state feature vector for the subsequent state of the one or more physical components 110 based on the generated one or more updated parameter values. The updated state feature vector indicates subsequent condition of the one or more physical components 110. The subsequent condition refers to future condition or next possible condition of the one or more physical components 110. The update state feature vector is a changed or modified value of the initial state feature vector. Further, the prediction module 308 is configured to determine an updated rate of corrosion of the one or more physical components 110 based on the updated state feature vector. The updated rate of corrosion is a changed or modified value of the initial rate of corrosion. Also, the prediction module 308 is configured to determine a difference between the rate of corrosion and updated rate of corrosion of the one or more physical components 110. The prediction module 308 is then configured to predict subsequent condition of the one or more physical components 110 for a defined time interval based on the determined difference. The defined time interval may either be defined by a user or by the computing system 114. The defined time interval may range from few seconds to several days/week. Advantageously, such predicted subsequent condition of the one or more physical components 110 helps in early prediction of leakages/corrosion or any other form of damage in the physical component such as a pipeline. Also, the such predicted subsequent condition helps in scheduling of planned maintenance much in advance. The predicted subsequent condition of the one or more physical components 110 is then fed to the controlling module 310.

In an exemplary embodiment, when there is a certain temperature in conjunction with a number of other physical parameters that are directly or indirectly dependent on the said temperature value, prediction module 308 predicts the future values based on the historical data that it has created for itself, with previous predictions made and the recorded behavior of the physical component 110 in similar conditions.

The controlling module 310 is configured to control operation of the one or more physical components 110 in the technical installation 102 based on the predicted subsequent condition of the one or more physical components 110. Specifically, the controlling module 310 is configured to identify type of the subsequent condition of the one or more physical components 110. The type of the subsequent condition may be healthy/normal, corrosion initiation, corrosion onset, corrosion propagation, critical (pipeline is 80 % corroded but still usable, time to take required actions to prevent unforeseen downtimes). The controlling module 310 is configured to classify the predicted subsequent condition of the one or more physical components 110 into one or more pre-stored types of conditions based on the identified type of the subsequent condition. The pre-stored types of conditions may be healthy/normal, corrosion initiation, corrosion onset, corrosion propagation, critical (pipeline is 80 % corroded but still usable, time to take required actions to prevent unforeseen downtimes). The classification may be performed using any mechanism known in the art. The controlling module 310 is configured to determine one or more control action corresponding to the classified predicted subsequent condition based on the pre-stored state table associated with the one or more physical components 110. In an embodiment, the one or more control action may be closing valve, updating parameter values of the one or more physical components 110, opening valves, redirecting the route of the flow of material to different physical component, signaling through connected alarm systems/hooters and the like. Also, the controlling module 310 is configured to deploy the determined one or more control action onto the respective physical component thereby controlling operation of the one or more physical components 110 in the technical installation 102. The deployment of control actions may be performed at run time using IOWA run time service. In an embodiment, the control actions are learned and stored in the storage 118. The control actions are learnt from previous incidents occurred or may be defined by the users specifically. Since a reinforcement learning based mechanism is used, the control actions are updated frequently and are learnt in parallel. The deployment of control action ensures that the pipeline is prevented from any further damage and hence improves the overall operational efficiency of the entire technical installation 102.

Further, the controlling module 310 is configured to validate the predicted subsequent state and subsequent one or more parameter values associated with the one or more physical components 110 based on a predefined rule. The one or more predefined rules comprises any standard validation rules known in the art. In an exemplary embodiment, the rules comprise:

a. Rule 1 : Normal : Information indicating that the parameters are in correct limits and Corrosion Threshold Factor UCT" is within the normal range, such as below 30. This means there is no corrosion.

b. Rule 2 : Minor : This rule indicates about the usability of pipeline as how long the physical component 110 can be used considering the current parameter values and UCT is calculated . This rule is executed when UCT range is 30-60.

c. Rule 3: Major : this rule indicates about the usability of physical component 110 and time period by when the user needs to take an action to control the situation considering the current parameter values and UCT is calculated. This rule is executed when the UCT range is 60 -80.

d. Rule 4 : Critical : this rule indicates the urgent requirement to schedule the maintenance for the physical component 110 and also time range when the computing system 114 controls the usage of pipeline to avoid unplanned downtime. Considering the current parameter values, the UCT is calculated. This rule is executed when the UCT is greater than 80. This rule helps the user to be aware of the downtime and take appropriate action within defined time period. If the user doesn't take required action within the defined time period, the algorithm monitors the system to take the action on the system to avoid any unforeseen damages. Here there is no complete corrosion has occurred so that required action can be taken.

The database 312 is configured to store the current state information of the one or more physical components 110, the analytics model, the one or more parameter values, the state feature vector, the notification messages, the one or more control action, subsequent conditions of the one or more physical components 110, the rate of corrosion, the reward values and the updated one or more parameter values.

The alert/notification module 314 is configured to generate notification messages indicating the predicted subsequent condition of the one or more physical components 110. The notification message may comprise timestamp of the occurrence of event, duration of the pipeline under usable condition, with respect to configured parameter like temperature , maintenance schedule information, system actions (in case of critical). In an embodiment, the notification message may be an alert text, or an alarm generated. Further, the alert/notification module 314 is configured to broadcast the notification messages to one or more user devices 108A-N via the network 104.

The visualization module 316 is configured to display the analytics model as a state information representation. Further, the visualization module 316 is configured to display state trends of the one or more physical components 110, for example, in the form of a graph.

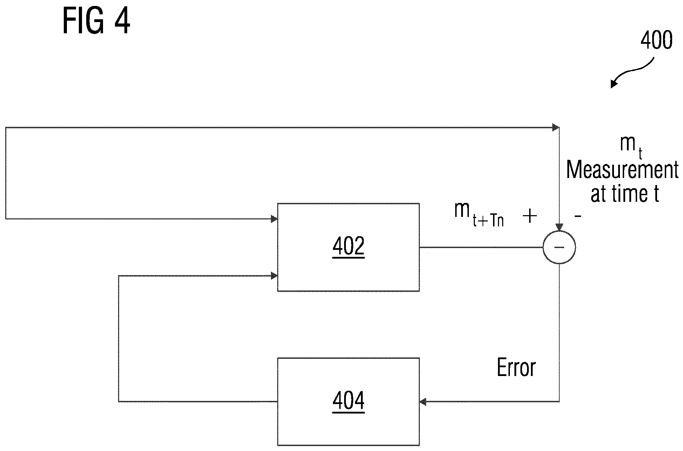

FIG 4 is a block diagram of an analytics model generation unit 304 such as those shown in FIG. 3, according to an embodiment of the present invention. The analytics model generation unit 304 comprises a model generator 402 and a model optimizer 404.

The model generator 402 receives sensor values corresponding to parameters such as temperature, humidity, pressure, and corrosion pit depth from PLCs. Subsequently, the model generator 402 also receives present and past sensor values stored in the database 312. Using the above two inputs, the model generator 402 generates the state analytics model for a time period t and t+Tn. The generated state analytics model for a time period t+Tn comprises future sensor values. Such future sensor values are referred as $m_t$+Tn. Later, a deviation or difference between current sensor values $m_t$ and the future sensor values is determined. This determined deviation, which is referred as Error, is fed to the model optimizer 404. The model optimizer 404 then outputs the future outputs for future inputs conforming to the current trend of inputs. This output of the model optimizer 404 is then fed back as additional input to the model generator 402.

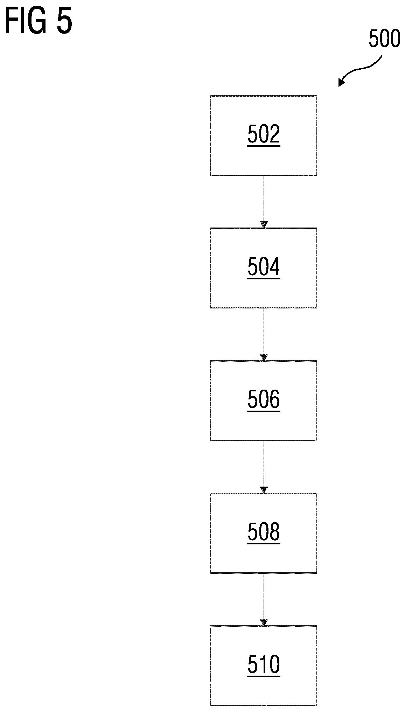

FIG 5 is a process flowchart illustrating an exemplary method 500 of preventing damage to physical components 110, according to the embodiment of the present invention. At step 502, current state information of one or more physical components 110 in a technical installation 102 is received from one or more sensing units 112A-N. The current state information comprises one or more parameter values associated with the one or more physical components 110 and a current state of the one or more physical components 110.

At step 504, a state analytics model of the one or more physical components 110 is generated based on the received current state information of the one or more physical components 110 using one or more analytics rules. The one or more analytics rules comprises reinforcement learning, and direct future prediction based rules. The one or more state analytics model of the one or more physical components 110 comprises a view of processed one or more parameter values, one or more states, other one or more physical components 110 correlated to the one or more physical components 110, and time stamp information.

At step 506, rate of corrosion of the one or more physical components 110 is determined based on the generated state analytics model. At step 508, subsequent condition of the one or more physical components 110 for a defined time interval is predicted based on the determined rate of corrosion. The predicted subsequent condition comprises subsequent state of the one or more physical components 110, time period associated with the state, and parameter values affected due to the subsequent state. At step 510, operation of the one or more physical components 110 in the technical installation 102 is controlled based on the predicted subsequent condition of the one or more physical components 110.

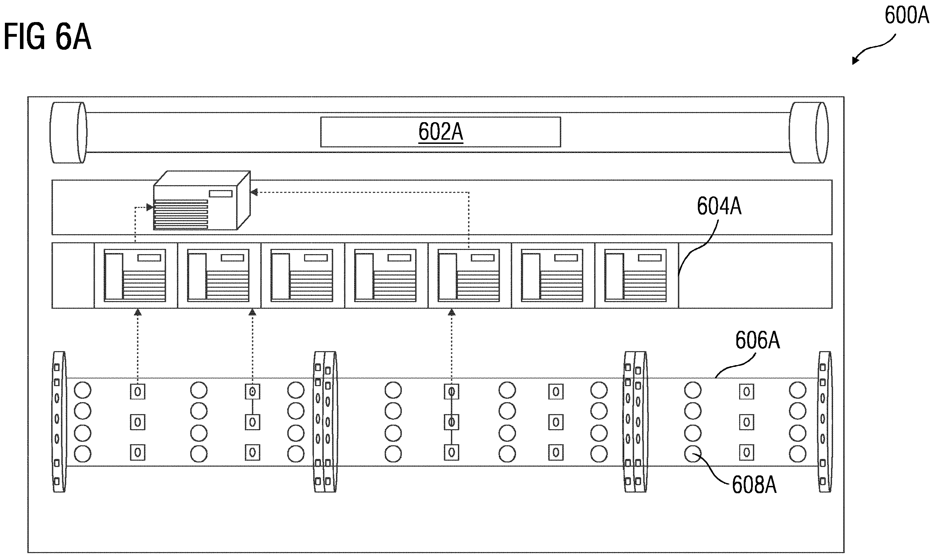

FIG 6A-C is a schematic representation of a technical installation 600 capable of preventing damage to physical components 110, according to another embodiment of the present invention. In FIG. 6A-6C, a technical installation 600 (i.e., 600a, 600b, 600c) is depicted. The technical installation 600 comprises a computing system 602 (602a,602b, 602c) such as the computing system 114 as show in FIG. 1. In a preferred embodiment, the computing system 602a may be an edge system. The technical installation 600 further comprises an agent 604 (604a, 604b, 604c) communicatively coupled to the computing system 602 (602a,602b, 602c). In an embodiment, the agent 604 (604a, 604b, 604c) may be a programmable logic controller (PLC) or an input output module. The agent 604 (604a, 604b, 604c) is further connected to one or more sensing units 608 (608a, 608b, 608c) deployed with a physical component 606 (606a, 606b, 606c), preferably a pipeline. The physical component 606 (606a, 606b, 606c) is analogous to the one or more physical component 110 as shown in FIG 1. The sensing units 608 (608a, 608b, 608c) are configured to capture real-time data associated with the physical component 606 (606a, 606b, 606c). The captured real-time data may comprise current state information of the physical component 606 (606a, 606b, 606c). The current state information comprises one or more parameter values associated with the physical component 606 (606a, 606b, 606c) and a current state of the one or more physical component 606 (606a, 606b, 606c). The one or more parameter values may be humidity, corrosion pit depth, and temperature associated with the physical component 606 (606a, 606b, 606c). The captured real-time data is sent to the agent 604 (604a, 604b, 604c) via the sensing units 608 (608a, 608b, 608c). The agent 604 (604a, 604b, 604c) further forwards the captured real-time data to the computing system 602a. The computing system 602 (602a,602b, 602c) upon receiving the real-time data, generates the state analytics model associated with the physical component 606 (606a, 606b, 606c) using one or more analytics rules. Further, the computing system 602 (602a,602b, 602c) determines rate of corrosion of the physical components 606a based on the generated state analytics model. Later, the computing system 602 (602a,602b, 602c) predicts subsequent condition of the physical components 606a for a defined time interval based on the determined rate of corrosion. Then, the computing system 602 (602a,602b, 602c) controls operation of the physical components 606 (606a, 606b, 606c) in the technical installation (i.e., 600a, 600b, 600c) based on the predicted subsequent condition.

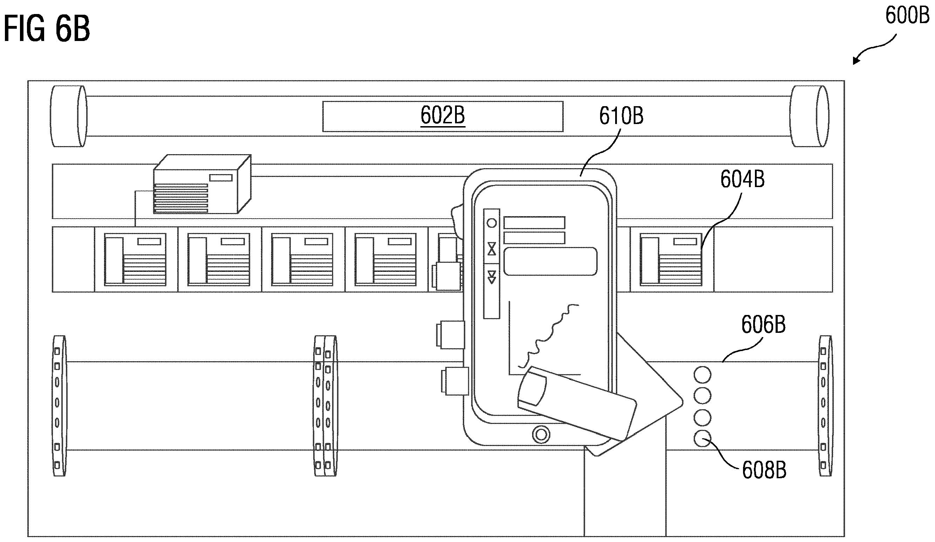

In FIG.6B, a user device 610b is configured to access the edge application hosted on the computing system 602b is depicted. The user device 610b is configured to display the one or more conditions of the physical components 606a-c. A user may be a field operator. In an embodiment, the user device 610b may further be configured to allow the user to perform one or more actions such as control operations on the physical components 606b based on the predicted subsequent condition of the physical components 606b. Using the edge application, the user at the user device 610b can control the operations of the physical components 606b in order to prevent damages to the physical components 606b.

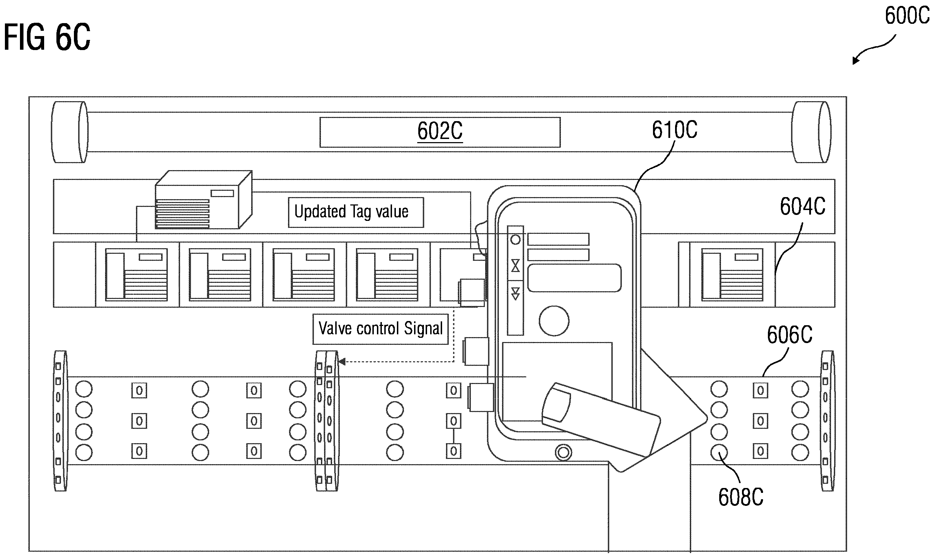

In FIG 6C, the method of controlling the operation of the physical component 606c using the user device 610c is depicted. The edge application at the user device 610c allows the user to take prescriptive action, such as closing of the valve of the pipeline when the corrosion level of the pipeline exceeds the permissible threshold limits. Such control signal is then transmitted to the valves of the physical component 606c, such as the pipeline, via the computing system 602c and the agent 604c. The user devices 610c and 610b comprises a graphical user interface displaying configuration of parameters, an alert indicator, a prescriptive alert text and also a virtual model of the pipeline being monitored.

FIG 7 is a schematic representation of a technical installation 700, such as those shown in FIG 1, capable of preventing damage to physical components 110, according to an embodiment of the present invention. In FIG 7, a technical installation 700 comprising a computing system 114, and a run time service 702 is depicted. The run time service 702 may either be inside the computing system 114 or external to the computing system 114. Also, the run time service 702 may also act as an agent 120 itself. The computing system 114 comprises the damage prevention module 116 and the storage 118 such as those shown in FIG 1. The run time service 702 is configured to receive tag values from the agent 120. The run time service 702 forwards the received tag values and the multi sensor data captured by the one or more sensing units 112A-N to the computing system 114. Upon receiving the tag values and the multi sensor data, the damage prevention module 116 retrieves the current and historical state information associated with the one or more physical components 110 from the storage 118. Later, the damage prevention module 116 predicts the subsequent condition of the physical components 110 in the manner as described above and controls the operation of the physical component 606a by determining control action associated with predicted subsequent condition and deploying the determined control action on the one or more physical components 110. The control actions may include updated tag values and updated one or more parameter values. Further, the control actions are deployed onto the one or more physical components 110 via the run time service 702 and the agent 120. Each of the determined control action is classified based on type of action and a reward is assigned. In an exemplary embodiment, reinforcement learning along with a standard scatter plot prediction algorithm (such as k-nearest neighbors) is used to classify the action taken by the agent 120 as desirable or undesirable and assign the reward to action accordingly.

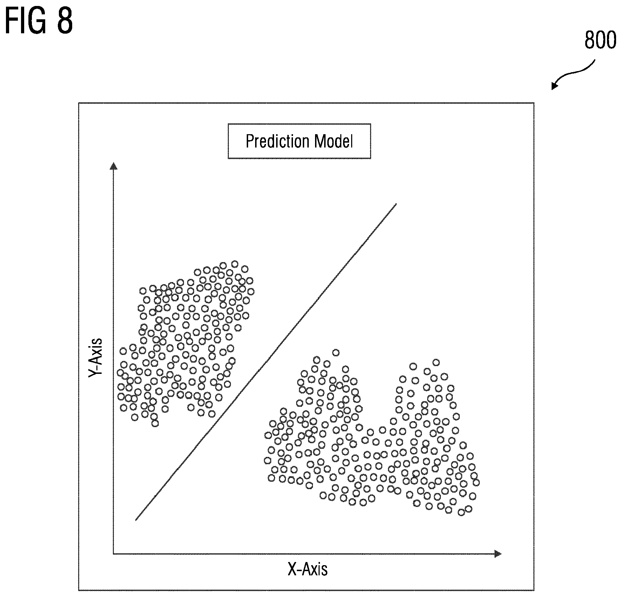

FIG 8 is a graphical representation 800 of an analytics model on a user interface of a user device, according to an embodiment of the present invention. In FIG 8, predicted subsequent values of the sensors of the one or more physical components 110 with respect to time is depicted. In FIG 8, y axis is represented by the predicted values and the x axis is represented by the time interval/range. The tangent in the graph represents trend of predicted sensor values, such as desirable or undesirable. This helps to classify the action taken by the agent for appropriate reward assignment.

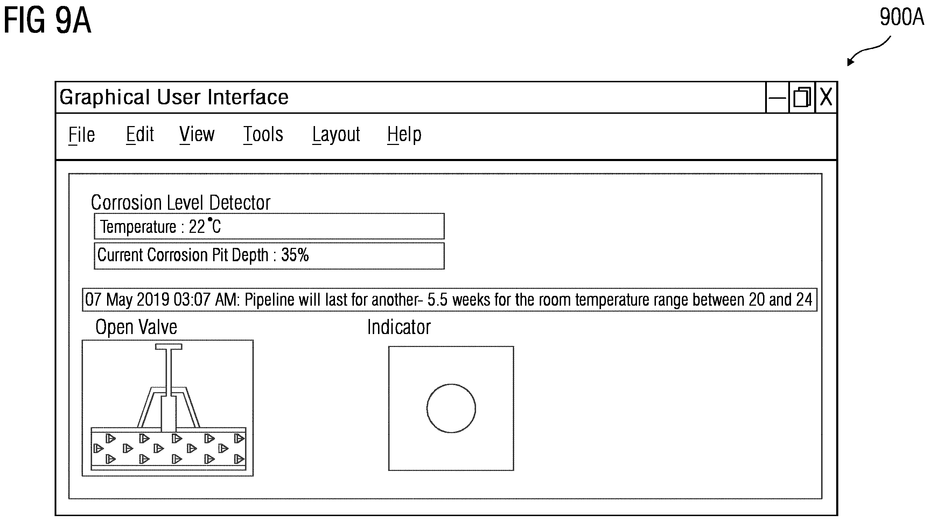

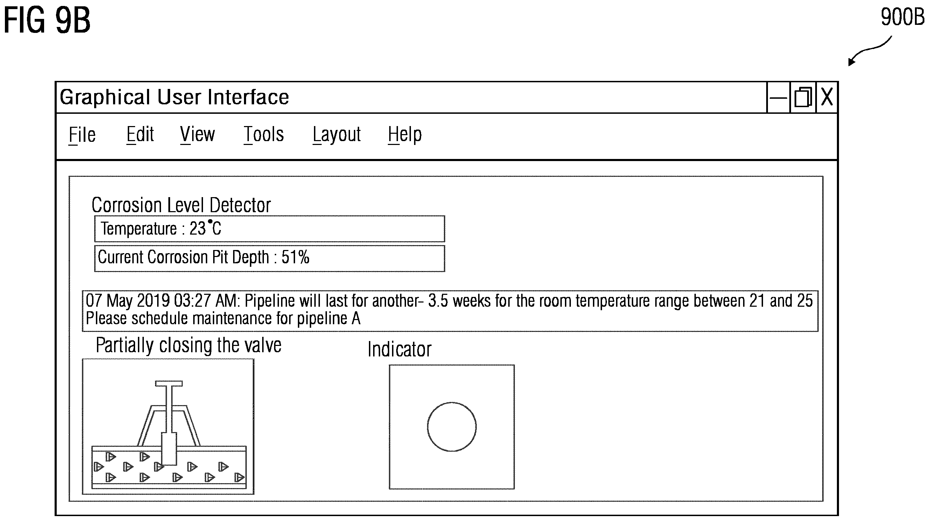

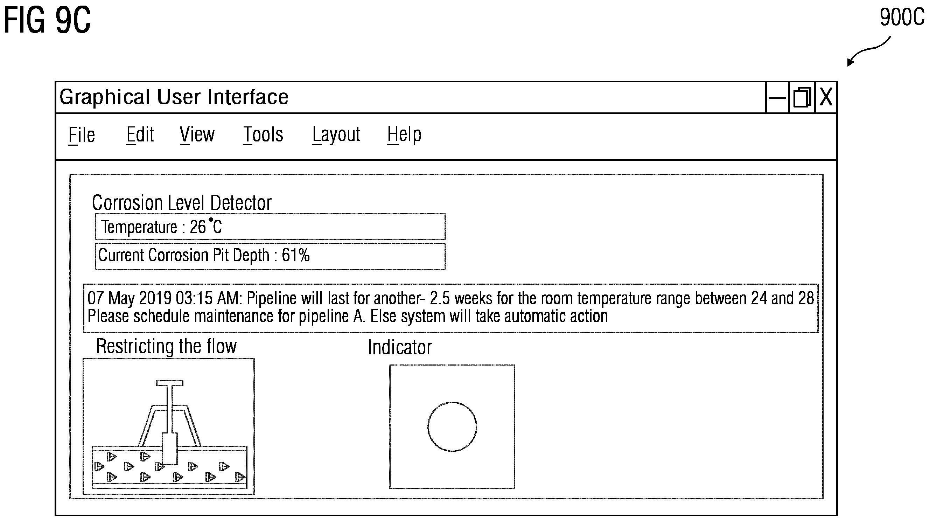

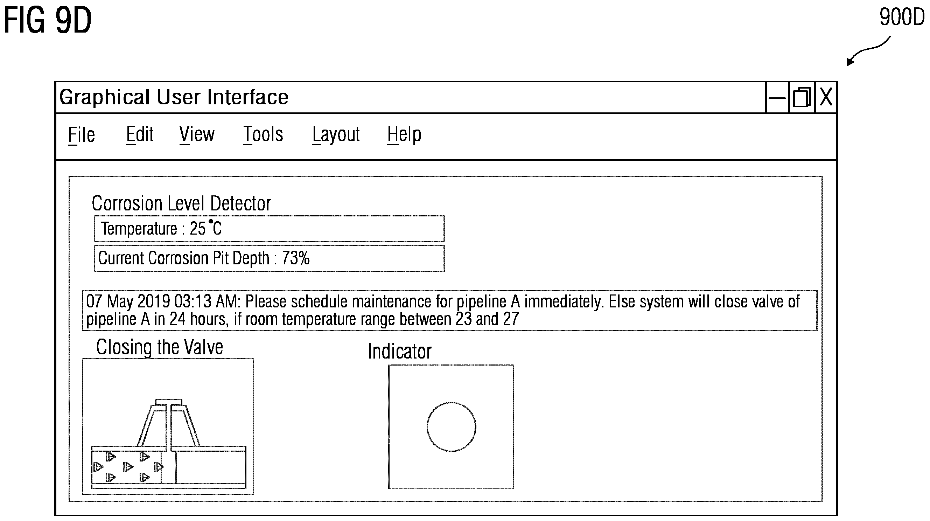

FIG 9A-D is a snapshot of an edge application capable of preventing damage to physical components 110, according to an embodiment of the present invention. FIG 9A depicts a graphical user interface of the edge application when the predicted subsequent condition of the one or more physical components 110 is at no risk. The graphical user interface 900A comprises configuration of the parameters, a corrosion level detector, condition alert indicator , the alert text and a virtual model of the one or more physical components 110. FIG 9B depicts a graphical user interface 900b of the edge application when the predicted subsequent condition of the one or more physical components 110 is at low risk. The alert text indicates usability of pipeline. FIG 9C depicts a graphical user interface 900c of the edge application when the predicted subsequent condition of the one or more physical components 110 is at high risk. The alert text indicates how long the pipeline is usable and by when the user needs to take action. FIG 9D depicts a graphical user interface 900c of the edge application when the predicted subsequent condition of the one or more physical components 110 is critical. In this stage, if the user does not take the action, the edge application automatically takes a control action on the one or more physical components 110 to save from further damage. The control action may be as closing of valve, but it can be modified based on the user needs.

The present invention provides an edge computing and containerization-based method and system for preventing damage to physical components in an industrial environment. In an exemplary embodiment, the method uses prescriptive analytics and reinforcement learning to achieve this.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

Further Embodiments:

1.A method (400) for preventing damage to physical components (110) in an industrial environment (100), the method comprising:

receiving, by a processor (202), current state information of one or more physical components (110, 606) in a technical installation (102, 600, 700) from one or more sensing units (112A-N, 608), wherein the current state information comprises one or more parameter values associated with the one or more physical components (110, 606) and a current state of the one or more physical components (110, 606);

generating, by the processor (202), a state analytics model of the one or more physical components (110, 606) based on the received current state information of the one or more physical components (110, 606) using one or more analytics rules;

determining, by the processor (202), rate of corrosion of the one or more physical components (110, 606) based on the generated state analytics model;

predicting, by the processor (202), subsequent condition of the one or more physical components (110, 606) for a defined time interval based on the determined rate of corrosion; and

controlling, by the processor(202), operation of the one or more physical components (110, 606) in the technical installation (102, 600, 700) based on the predicted subsequent condition of the one or more physical components (110, 606).

2. The method (400) according to embodiment 1, wherein the one or more state analytics model of the one or more physical components (110, 606) comprises a view of processed one or more parameter values, one or more states, other one or more physical components correlated to the one or more physical components (110, 606), and time stamp information.

3. The method (400) according to embodiment 1, wherein predicted subsequent condition comprises subsequent state of the one or more physical components (110, 606), time period associated with the state, and parameter values affected due to the subsequent state.

4.The method (400) according to embodiment 1, further comprising:
validating the predicted subsequent state and subsequent one or more parameter values associated with the one or more physical components (110, 606) based on a predefined rule.

5.The method (400) according to any of the preceding embodiments, wherein generating the state analytics model of the physical component based on the received current state information of the one or more physical components (110, 606) using one or more analytics rules comprises:

determining correlation between the one or more parameter values associated with the one or more physical components (110, 606);
determining previous states of the one or more physical components (110) using pre-stored state table associated with the one or more physical components (110, 606);
computing an state feature vector for the current state of the one or more physical components (110, 606) based on the determined correlation and the determined previous states of the one or more physical components (110, 606), wherein the state feature vector indicates condition of the one or more physical components (110, 606); and
generating the state analytics model of the one or more physical components (110, 606) based on the computed state feature vector.

6.The method (400) according to any of the preceding embodiments wherein determining rate of corrosion of the one or more physical components (110, 606) based on the generated state analytics model comprises:

identifying a set of parameter values relevant to corrosion condition of the one or more physical components (110, 606) by analyzing the state analytics model;
comparing the identified set of parameter values with a corresponding pre-stored set of parameter values relevant to the corrosion condition of the one or more physical components (110, 606);
identifying a deviation in the identified set of parameter values relevant to the corrosion condition based on the comparison; and
determining rate of corrosion of the one or more physical components (110, 606) based on the identified deviation in the identified set of parameter values relevant to the corrosion condition.

7. The method (400) according to any of the preceding embodiments, wherein predicting subsequent condition of the one or more physical components (110, 606) for a defined time interval based on the determined rate of corrosion comprises:

processing the determined rate of corrosion using one of machine learning model;
generating one or more updated parameter values of the one or more physical components (110, 606) for the defined time interval based on the processed rate of corrosion;
computing an updated state feature vector for the subsequent state of the one or more physical components (110, 606) based on the generated one or more updated parameter values, wherein the updated state feature vector indicates subsequent condition of the one or more physical components (110, 606);
determining an updated rate of corrosion of the one or more physical components (110, 606) based on the updated state feature vector;
determining a difference between the rate of corrosion and updated rate of corrosion of the one or more physical components (110, 606); and
predicting subsequent condition of the one or more physical components (110, 606) for a defined time interval based on the determined difference.

8. The method (400) according to any of the preceding embodiments, wherein controlling the operation of the one or more physical components (110, 606) in the technical installation (102, 600, 700) based on the predicted subsequent condition of the one or more physical components (110, 606) comprises:

identifying type of the subsequent condition of the one or more physical components (110, 606);
classifying the predicted subsequent condition of the one or more physical components (110, 606) into one or more pre-stored types of conditions based on the identified type of the subsequent condition;
determining one or more control action corresponding to the classified predicted subsequent condition based on the pre-stored state table associated with the one or more physical components (110, 606); and
deploying the determined one or more control action onto the respective physical component thereby controlling operation of the one or more physical components (110, 606) in the technical installation (102, 600, 700).

9. The method (400) according to any of the preceding embodiments, wherein controlling the operation of the one or more physical components (110, 606) in the technical installation (102, 600, 700) based on the predicted subsequent condition of the one or more physical components (110, 606) comprises:

generating notification messages indicating the predicted subsequent condition of the one or more physical components (110, 606); and
broadcasting the notification messages to one or more user devices (108A-N, 610) via a network (104).

10. A computing system (114, 602) for preventing damage of physical components (110, 606) in an industrial environment (100), comprising:

one or more processor(s) (202); and
a memory (204) coupled to the one or more processor (s) (202), wherein the memory (204) comprises damage prevention module (116) stored in the form of machine-readable instructions executable by the one or more processor(s) (202), wherein the damage prevention module (116) is capable of performing a method according to any of the embodiments 1-9.

11. A technical installation (102, 600, 700)comprising:

one or more physical components (110, 606);
one or more sensing units (112A-N, 608) coupled to the one or more physical components (110, 606) configured for:
capturing real-time data associated with the one or more physical components (110, 606);
a computing system (114, 602) comprising a damage prevention module (116) communicatively coupled to the one or more sensing units (112A-N, 608), wherein the damage prevention module (116) is configured for performing a method according to embodiments 1-9; and
an agent (120, 604) communicatively coupled to the computing system (114, 602).

12. An industrial environment (100) comprising:

one or more user devices (108A-N, 610);
one or more technical installation (102, 600, 700) comprising a computing system (114, 602) as claimed in embodiment 10; and
a cloud computing system (106) communicatively coupled to the one or more technical installation (102, 600, 700) and the one or more user devices (108A-N, 610) via a network (104).

13. A computer-program product, having machine-readable instructions stored therein, that when executed by a processor(s) (202), cause the processor(s) (202) to perform method steps according to any of the embodiments 1-9.

REFERENCE SIGN LIST

100-industrial environment
102-technical installation
104-network
106-cloud computing system
108A-N-one or more user devices
110-one or more equipment
112A-N-one or more sensing unit

114-computing system
116- damage prevention module
118-storage
120- anomalous agent
202-processor
204-memory
206- a communication interface
208 a network interface
210 an input/output unit
212 bus
302-a request handler
304-analytics model generation unit
306-processing module
308-prediction module
310-controlling module
312-database
314- alert/notification module
316-a visualization module
402- model generator
404- model optimizer
600-technical installation
602-computing system
604-agent
606-physical component
608-sensing unit
610-user device
700-technical installation
702- run time service
900-graphical user interface

**Claims**

1. A method (400) for preventing damage to physical components (110) in an industrial environment (100), the method comprising:

   receiving, by a processor (202), current state information of one or more physical components (110, 606) in a technical installation (102, 600, 700) from one or more sensing units (112A-N, 608), wherein the current state information comprises one or more parameter values associated with the one or more physical components (110, 606) and a current state of the one or more physical components (110, 606);
   generating, by the processor (202), a state analytics model of the one or more physical components (110, 606) based on the received current state information of the one or more physical components (110, 606) using one or more analytics rules;
   determining, by the processor (202), rate of corrosion of the one or more physical components (110, 606) based on the generated state analytics model;
   predicting, by the processor (202), subsequent condition of the one or more physical components (110, 606) for a defined time interval based on the determined rate of corrosion; and
   controlling, by the processor(202), operation of the one or more physical components (110, 606) in the technical installation (102, 600, 700) based on the predicted subsequent condition of the one or more physical components (110, 606).

2. The method (400) according to claim 1, wherein the one or more state analytics model of the one or more physical components (110, 606) comprises a view of processed one or more parameter values, one or more states, other one or more physical components correlated to the one or more physical components (110, 606), and time stamp information.

3. The method (400) according to claim 1, wherein predicted subsequent condition comprises subsequent state of the one or more physical components (110, 606), time period associated with the state, and parameter values affected due to the subsequent state.

4. The method (400) according to claim 1, further comprising:
   validating the predicted subsequent state and subsequent one or more parameter values associated with the one or more physical components (110, 606) based on a predefined rule.

5. The method (400) according to any of the preceding claims, wherein generating the state analytics model of the physical component based on the received current state information of the one or more physical components (110, 606) using one or more analytics rules comprises:

   determining correlation between the one or more parameter values associated with the one or more physical components (110, 606);
   determining previous states of the one or more physical components (110) using pre-stored state table associated with the one or more physical components (110, 606);
   computing an state feature vector for the current state of the one or more physical components (110, 606) based on the determined correlation and the determined previous states of the one or more physical components (110, 606), wherein the state feature vector indicates condition of the one or more physical components (110, 606); and
   generating the state analytics model of the one or more physical components (110, 606) based on the computed state feature vector.

6. The method (400) according to any of the preceding claims wherein determining rate of corrosion of the one or more physical components (110, 606) based on the generated state analytics model comprises:

   identifying a set of parameter values relevant to corrosion condition of the one or more physical components (110, 606) by analyzing the state analytics model;
   comparing the identified set of parameter values with a corresponding pre-stored set of parameter values relevant to the corrosion condition of the one or more physical components (110, 606);
   identifying a deviation in the identified set of parameter values relevant to the corrosion condition based on the comparison; and
   determining rate of corrosion of the one or more physical components (110, 606) based on the identified deviation in the identified set of parameter values relevant to the corrosion condition.

7. The method (400) according to any of the preceding claims, wherein predicting subsequent condition of the one or more physical components (110, 606) for a defined time interval based on the determined rate of corrosion comprises:

   processing the determined rate of corrosion using one of machine learning model;
   generating one or more updated parameter values of the one or more physical components (110, 606) for the defined time interval based on the processed rate of corrosion;
   computing an updated state feature vector for the subsequent state of the one or more physical components (110, 606) based on the generated one or more updated parameter values, wherein the updated state feature vector indicates subsequent condition of the one or more physical components (110, 606);
   determining an updated rate of corrosion of the one or more physical components (110, 606) based on the updated state feature vector;
   determining a difference between the rate of corrosion and updated rate of corrosion of the one or more physical components (110, 606); and
   predicting subsequent condition of the one or more physical components (110, 606) for a defined time interval based on the determined difference.

8. The method (400) according to any of the preceding claims, wherein controlling the operation of the one or more physical components (110, 606) in the technical installation (102, 600, 700) based on the predicted subsequent condition of the one or more physical components (110, 606) comprises:

   identifying type of the subsequent condition of the one or more physical components (110, 606);
   classifying the predicted subsequent condition of the one or more physical components (110, 606) into one or more pre-stored types of conditions based on the identified type of the subsequent condition;
   determining one or more control action corresponding to the classified predicted subsequent condition based on the pre-stored state table associated with the one or more physical components (110, 606); and
   deploying the determined one or more control action onto the respective physical component thereby controlling operation of the one or more physical components (110, 606) in the technical installation (102, 600, 700).

9. The method (400) according to any of the preceding claims, wherein controlling the operation of the one or more physical components (110, 606) in the technical installation (102, 600, 700) based on the predicted subsequent condition of the one or more physical components (110, 606) comprises:

generating notification messages indicating the predicted subsequent condition of the one or more physical components (110, 606); and
broadcasting the notification messages to one or more user devices (108A-N, 610) via a network (104).

10. A computing system (114, 602) for preventing damage of physical components (110, 606) in an industrial environment (100), comprising:

one or more processor(s) (202); and
a memory (204) coupled to the one or more processor (s) (202), wherein the memory (204) comprises damage prevention module (116) stored in the form of machine-readable instructions executable by the one or more processor(s) (202), wherein the damage prevention module (116) is capable of performing a method according to any of the claims 1-9.

11. A technical installation (102, 600, 700)comprising:

one or more physical components (110, 606);
one or more sensing units (112A-N, 608) coupled to the one or more physical components (110, 606) configured for:
capturing real-time data associated with the one or more physical components (110, 606);
a computing system (114, 602) comprising a damage prevention module (116) communicatively coupled to the one or more sensing units (112A-N, 608), wherein the damage prevention module (116) is configured for performing a method according to claims 1-9; and
an agent (120, 604) communicatively coupled to the computing system (114, 602).

12. An industrial environment (100) comprising:

one or more user devices (108A-N, 610);
one or more technical installation (102, 600, 700) comprising a computing system (114, 602) as claimed in claim 10; and
a cloud computing system (106) communicatively coupled to the one or more technical installation (102, 600, 700) and the one or more user devices (108A-N, 610) via a network (104).

13. A computer-program product, having machine-readable instructions stored therein, that when executed by a processor(s) (202), cause the processor(s) (202) to perform method steps according to any of the claims 1-9.

# FIG 1

# FIG 2

114

202

204

116

206 212

208 210

# FIG 3

116

| | | |
|---|---|---|
| 302 | 304 | 306 |
| 308 | 310 | 312 |
| 314 | 316 | |

FIG 4

400

$m_t$
Measurement
at time t

$m_{t+Tn}$  +    -

402

⊖

404

Error

# FIG 5

500

```
┌─────────┐
│   502   │
└─────────┘
     │
     ▼
┌─────────┐
│   504   │
└─────────┘
     │
     ▼
┌─────────┐
│   506   │
└─────────┘
     │
     ▼
┌─────────┐
│   508   │
└─────────┘
     │
     ▼
┌─────────┐
│   510   │
└─────────┘
```

FIG 6A

600A

602A

604A

606A

608A

# FIG 6B

600B

602B

610B

604B

606B

608B

EP 3 919 990 A1

FIG 6C

600C

602C

610C

604C

Updated Tag value

Valve control Signal

606C

608C

EP 3 919 990 A1

# FIG 7

700

114

State

Reward

116 ← 118

Action

Multi Sensory Data:
CPD, Temp, Humidity

Send actions
to IOWA

702

Tag Values
from PC

Update Tag
Values

FIG 8

800

Prediction Model

Y-Axis

X-Axis

# FIG 9A

900A

EP 3 919 990 A1

**Graphical User Interface**  — ⧉ X

<u>F</u>ile   <u>E</u>dit   <u>V</u>iew   <u>T</u>ools   <u>L</u>ayout   <u>H</u>elp

Corrosion Level Detector

Temperature : 22 °C

Current Corrosion Pit Depth : 35%

07 May 2019 03:07 AM: Pipeline will last for another- 5.5 weeks for the room temperature range between 20 and 24

Open Valve                              Indicator

# FIG 9B

900B

**Graphical User Interface**    — ▢ X

File    Edit    View    Tools    Layout    Help

Corrosion Level Detector

Temperature : 23°C

Current Corrosion Pit Depth : 51%

07 May 2019 03:27 AM: Pipeline will last for another- 3.5 weeks for the room temperature range between 21 and 25
Please schedule maintenance for pipeline A

Partially closing the valve      Indicator

EP 3 919 990 A1

# FIG 9C

900C

Graphical User Interface     — ▢ X

File    Edit    View    Tools    Layout    Help

Corrosion Level Detector

Temperature : 26°C

Current Corrosion Pit Depth : 61%

07 May 2019 03:15 AM: Pipeline will last for another- 2.5 weeks for the room temperature range between 24 and 28
Please schedule maintenance for pipeline A. Else system will take automatic action

Restricting the flow          Indicator

EP 3 919 990 A1

# FIG 9D

900D

Graphical User Interface — □ X

File   Edit   View   Tools   Layout   Help

**Corrosion Level Detector**

Temperature : 25 °C

Current Corrosion Pit Depth : 73%

07 May 2019 03:13 AM: Please schedule maintenance for pipeline A immediately. Else system will close valve of pipeline A in 24 hours, if room temperature range between 23 and 27

Closing the Valve

Indicator

EP 3 919 990 A1

Europäisches
Patentamt

European
Patent Office

Office européen
des brevets

# EUROPEAN SEARCH REPORT

Application Number

EP 20 17 8448

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/356346 A1 (JIANG XIAOMO [US] ET AL) 14 December 2017 (2017-12-14) * paragraph [0019] - paragraph [0059]; figures 1,2 * ----- | 1-13 | INV. G05B13/04 G05B19/418 G05B23/02 |
| X | US 2018/282634 A1 (VAN DE COTTE MICHAEL [US] ET AL) 4 October 2018 (2018-10-04) * paragraph [0033] - paragraph [0105] * ----- | 1-13 | |
| | | | TECHNICAL FIELDS SEARCHED (IPC) G05B |

The present search report has been drawn up for all claims

| Place of search | Date of completion of the search | Examiner |
|---|---|---|
| The Hague | 16 November 2020 | Tsirigkas, Dimitrios |

EPO FORM 1503 03.82 (P04C01)

## ANNEX TO THE EUROPEAN SEARCH REPORT
## ON EUROPEAN PATENT APPLICATION NO.

EP 20 17 8448

This annex lists the patent family members relating to the patent documents cited in the above-mentioned European search report.
The members are as contained in the European Patent Office EDP file on
The European Patent Office is in no way liable for these particulars which are merely given for the purpose of information.

16-11-2020

| Patent document cited in search report | | Publication date | Patent family member(s) | Publication date |
|---|---|---|---|---|
| US 2017356346 | A1 | 14-12-2017 | NONE | |
| US 2018282634 | A1 | 04-10-2018 | NONE | |

EPO FORM P0459

For more details about this annex : see Official Journal of the European Patent Office, No. 12/82